# EUROPEAN PATENT APPLICATION

(11) **EP 1 819 061 A2**
(43) Date of publication of application: **15.08.2007**
(21) Application number: 07002928.5
(22) Date of filing: 12.02.2007
(51) Int. Cl.: H04B 1/26

(54) **Frequency converter for receiving satellite broadcast**

(30) Priority: 14.02.2006 JP 2006037133; 28.02.2006 JP 2006053488
(71) Applicant: ALPS ELECTRIC CO., LTD., Tokyo 145-8501 (JP)
(72) Inventor: Keiichiro, Sato, Alps Electric Co., Ltd., Tokyo, 145-8501 (JP)
(74) Representative: Klunker . Schmitt-Nilson . Hirsch

(57) **Abstract**

Broadcast channel signals received from a satellite are converted by group conversion in mixers and are input to a first switch circuit. Then, the signals are output from first and second output terminals and are input to first and second frequency converting blocks. First and second attenuators are provided between the first and second output terminals and the first and second frequency converting blocks. Gain in an IF amplifier is increased and the gain increased in the IF amplifier is decreased in first to fourth attenuators, so that total gain is maintained.

## Description

### BACKGROUND OF THE INVENTION

### 1. Field of the Invention

The present invention relates to a frequency converter for receiving satellite broadcast, capable of outputting a plurality of signals through an output cable.

### 2. Description of the Related Art

Due to demand for connecting four BS (broadcast satellite) receivers (e.g., two BS receivers each including two tuners) to a frequency converter for receiving satellite broadcast (LNB: low-noise block converter), a four-output LNB including four output terminals exists. However, the four-output LNB requires four cables connected to the BS receivers, which causes a heavy economic burden. Under these circumstances, an LNB that outputs four signals through a cable has been suggested (for example, see Patent Document 1: United States Patent Application No. 2003/0141949).

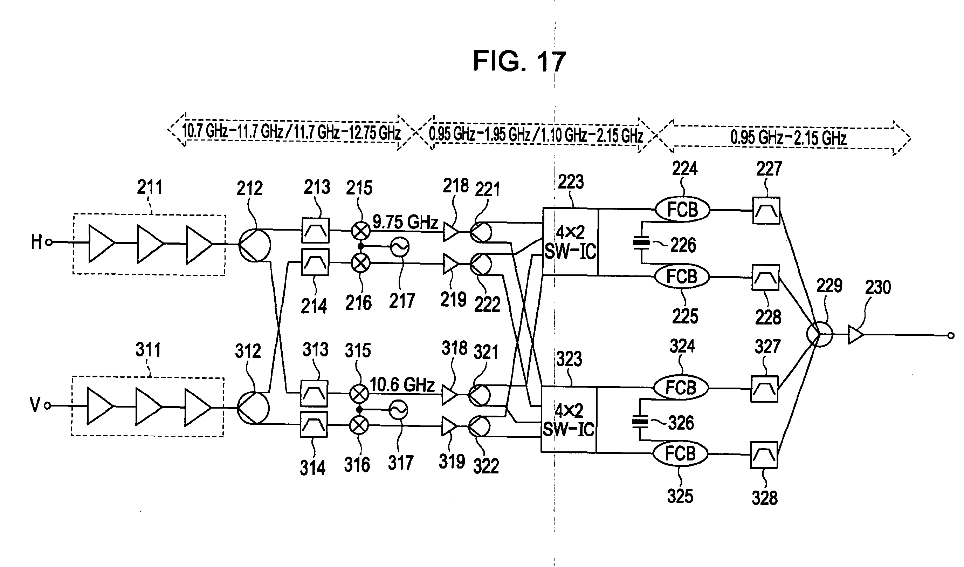

Fig. 17 shows an example of a configuration of an LNB that outputs four signals through a cable. A plurality of first broadcast signals (e.g., horizontal polarization signals H) and a plurality of second broadcast signals (e.g., vertical polarization signals V) transmitted from a satellite are received and input to the LNB. The horizontal polarization signals H are input to a low-noise amplifier 211 of the LNB, and the vertical polarization signals V are input to another low-noise amplifier 311. The horizontal polarization signals H output from the low-noise amplifier 211 are distributed by a distributor 212 for a low band and a high band. Also, the vertical polarization signals V output from the low-noise amplifier 311 are distributed by a distributor 312 for the low band and the high band. The horizontal polarization signals H and the vertical polarization signals V distributed for the low band are input to band-pass filters 213 and 214, where the low band (e.g., 10.7 GHz to 11.7 GHz) is extracted. The horizontal polarization signals H and the vertical polarization signals V distributed for the high band are input to band-pass filters 313 and 314, where the high band (e.g., 11.7 GHz to 12.75 GHz) is extracted. The frequencies of the horizontal polarization signals H and the vertical polarization signals V on the low-band side (10.7 GHz to 11.7 GHz) are converted to, for example, 0.95 GHz to 1.95 GHz in mixers 215 and 216. The frequencies of the horizontal polarization signals H and the vertical polarization signals V on the high-band side (11.7 GHz to 12.75 GHz) are converted to, for example, 1.10 GHz to 2.15 GHz in mixers 315 and 316. An oscillator 217 is provided for the mixers 215 and 216 on the low-band side, and an oscillator 317 is provided for the mixers 315 and 316 on the high-band side. The horizontal polarization signals H and the vertical polarization signals V converted to a frequency band of 0.95 GHz to 1.95 GHz are amplified in amplifiers 218 and 219, and are distributed again by distributors 221 and 222. The horizontal polarization signals H and the vertical polarization signals V converted to a frequency band of 1.10 GHz to 2.15 GHz are amplified in amplifiers 318 and 319, and are distributed again by distributors 321 and 322. Accordingly, four signals output from the four distributors 221, 222, 321, and 322 are input to each of two switch circuits 223 and 323. That is, low-band and high-band horizontal polarization signals H and low-band and high-band vertical polarization signals V are input to each of the switch circuits 223 and 323. The switch circuit 223 selects two signals and outputs the selected signals to frequency converting blocks (hereinafter referred to as "FCBs") 224 and 225 in parallel. Also, the switch circuit 323 selects two signals and outputs the selected signals to FCBs 324 and 325 in parallel. The respective FCBs 224, 225, 324, and 325 perform frequency conversion on the horizontal polarization signals H and the vertical polarization signals V from the frequency band of 0.95 GHz to 1.95 GHz or 1.10 GHz to 2.15 GHz to respective specific fixed frequencies (e.g., 1.4 GHz in FCB 224, 1.526 GHz in FCB 225, 1.632 GHz in FCB 324, and 1.748 GHz in FCB 325). The signals of which frequencies have been converted to the fixed frequencies in the respective FCBs 224, 225, 324, and 325 are input to corresponding band-pass filters 227, 228, 327, and 328, where unnecessary frequency components are cut. Then, power combining is performed in a power combiner 229, and the signals are output via an amplifier 230 to a cable connected to an output port.

In the LNB shown in Fig. 17, however, RF signals are converted to two IF signals of 0.95 GHz to 1.95 GHz and 1.10 GHz to 2.15 GHz, so that the two oscillators 217 and 317 and the four mixers 215, 216, 315, and 316 are required between the distributors 212 and 312 and the switch circuits 223 and 323. This configuration causes an increase in the number of components and is disadvantageous in cost and space.

In order to reduce the components, RF signals (10.7 GHz to 11.7 GHz and 11.7 GHz to 12.75 GHz) may be directly converted to an IF signal (e.g., 0.5 GHz to 2.55 GHz).

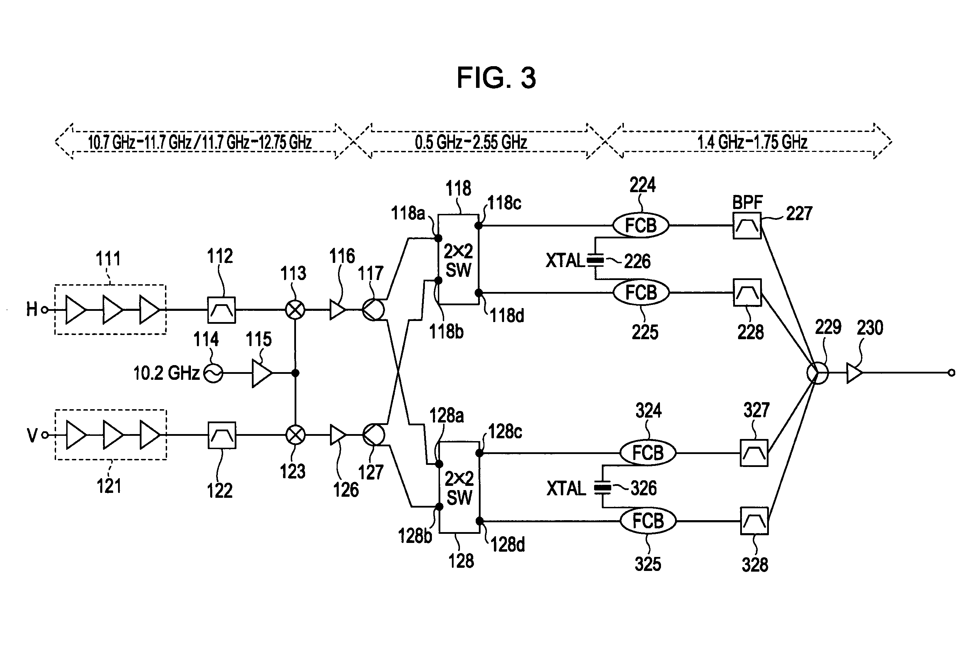

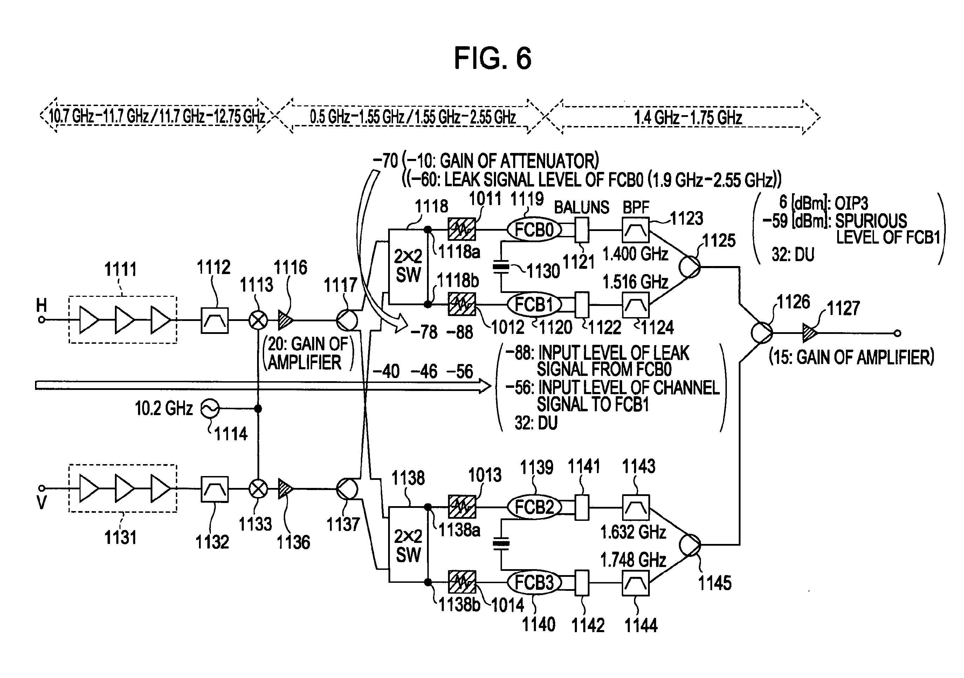

Fig. 3 shows an example of a configuration of an LNB capable of directly converting RF signals to an IF signal. Horizontal polarization signals H are input to a low-noise amplifier 111 and vertical polarization signals V are input to another low-noise amplifier 121. The horizontal polarization signals H output from the low-noise amplifier 111 are input to a band-pass filter 112, where a desired frequency band (e.g., 10.7 GHz to 12.75 GHz) is extracted. The vertical polarization signals V output from the low-noise amplifier 121 are input to a band-pass filter 122, where a desired frequency band (e.g., 10.7 GHz to 12.75 GHz) is extracted. The RF signals of the horizontal polarization signals H (10.7 GHz to 12.75 GHz) extracted in the band-pass filter 112 are frequency-converted in a mixer 113, serving as a first frequency converting block, so that an IF signal (e.g., 0.5 GHz to 2.55 GHz) as a first channel signal group is generated. Also, the RF signals of the vertical polarization signals V (10.7 GHz to 12.75 GHz) extracted in the band-pass filter 122 are frequency-converted in a mixer 123, serving as a second frequency converting block, so that an IF signal (e.g., 0.5 GHz to 2.55 GHz) as a second channel signal group of the same intermediate frequency band is generated. An oscillation frequency (e.g., 10.2 GHz) supplied to the mixers 113 and 123 is from an oscillator 114. An oscillation signal output from the oscillator 114 is input to the both mixers 113 and 123 via an amplifier 115. The amplifier 115 may be unnecessary depending on an output level of the oscillator. The IF signals output from the mixers 113 and 123 are input to distributors 117 and 127 via amplifiers 116 and 126, and are distributed to first and second switch circuits 118 and 128. The respective switch circuits 118 and 128 receive two IF signals: a horizontal polarization signal H and a vertical polarization signal V, and output the two IF signals to corresponding FCBs 224, 225, 324 and 325, serving as third to sixth frequency converting blocks. The configuration of the subsequent stages of the switch circuits 118 and 128 is the same as in the LNB shown in Fig. 6. In this way, by directly converting RF signals to an IF signal, the number of oscillators and mixers can be decreased. Hereinafter, an LNB that directly converts wideband (10.7 GHz to 11.7 GHz/11.7 GHz to 12.75 GHz) television signals to narrowband (0.5 GHz to 2.55 GHz) signals, such as the LNB shown in Fig. 3, is called a wideband LNB for convenience.

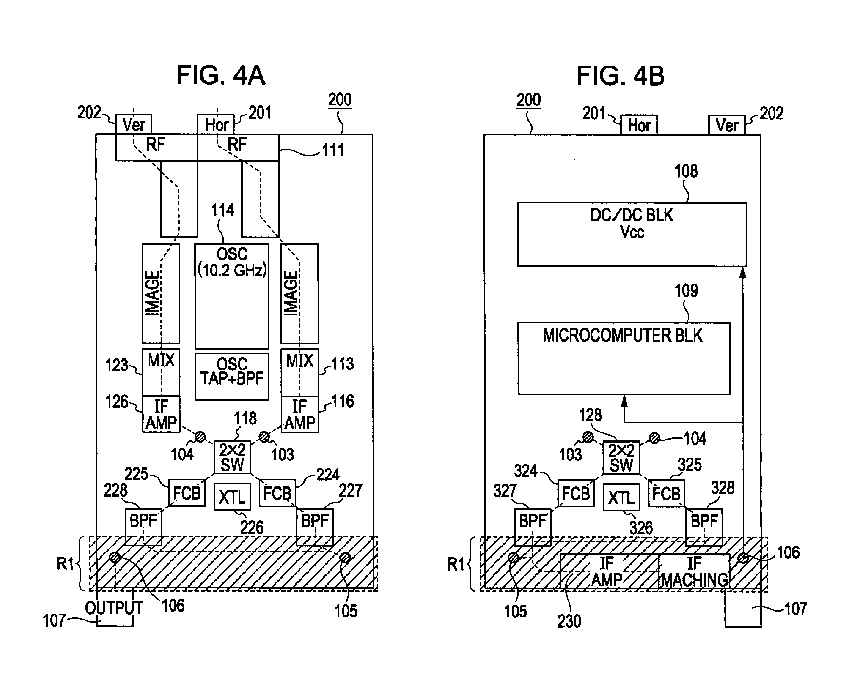

Figs. 4A and 4B are plan views showing an example of a circuit layout of the wideband LNB including the circuit configuration shown in Fig. 3. Herein, components are laid out in accordance with a known layout method of an LNB. As shown in Fig. 4A, circuit elements and lines from input ports 201 and 202 for horizontal and vertical polarization signals H and V to the intermediate frequency amplifiers 116 and 126 are placed on one of surfaces of a circuit board 200. As shown in Fig. 4B, a DC/DC block 108 for supplying power and a microcomputer block 109 are placed in about half of space on the side of the input ports 201 and 202 on the other surface of the circuit board 200. On the surface of the circuit board shown in Fig. 4A, the switch circuit 118 to select a signal from among signals supplied from the distributors 117 and 127 (not shown) and circuit elements from the switch circuit 118 to the band-pass filters 227 and 228 are placed. On the other surface of the circuit board shown in Fig. 4B, the switch circuit 128 to select a signal from among signals supplied from the distributors 117 and 127 (not shown) via through-holes 103 and 104, circuit elements from the switch circuit 128 to the band-pass filters 327 and 328, the amplifier 230 immediately before a cable, and an impedance matching circuit 231 (not shown) are placed in the rest of the space.

This wideband LNB has a smaller number of components, but includes additional components such as the FCBs 224, 225, 324, and 325, compared to the four-output LNB including four output terminals. Therefore, the size of the circuit board needs to be extended by a shaded area R1 shown in Figs. 4A and 4B, with respect to the circuit board of the four-output LNB.

However, if the above-described circuit layout of the wideband LNB is too large for the size of the circuit board of the four-output LNB, an existing mold for the circuit board of the four-output LNB cannot be used. In that case, a new mold for the circuit board of the wideband LNB needs to be made, which leads to an increase in cost. Thus, the circuit layout needs to be designed so that the circuit elements of the wideband LNB can be laid out on the circuit board of the four-output LNB.

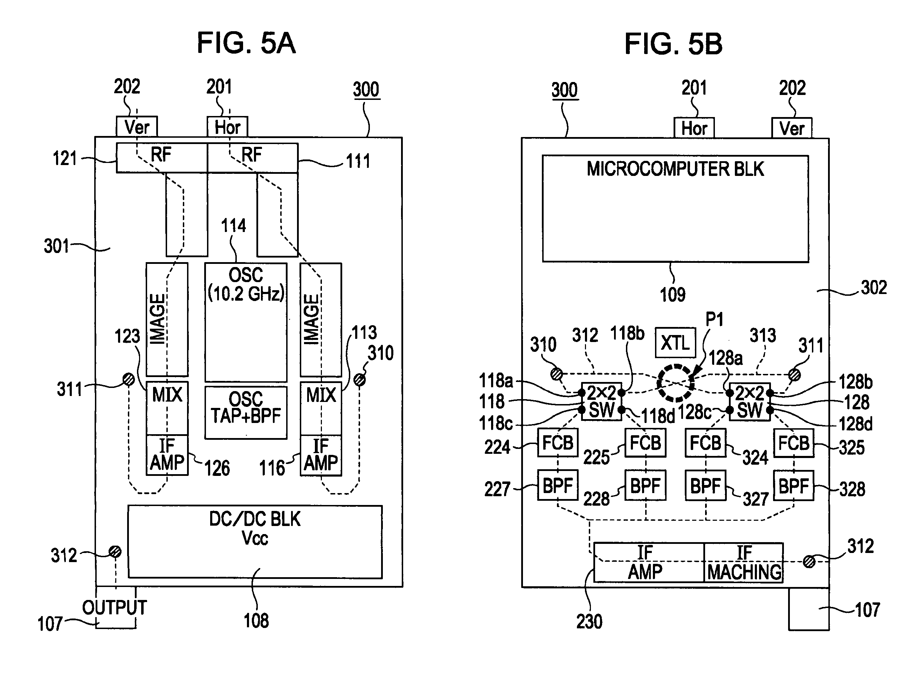

For example, as shown in Figs. 5A and 5B, elements from the input ports 201 and 202 to the intermediate frequency amplifiers 116 and 126 are placed on one surface 301 of a circuit board 300. The switch circuit 118, the FCBs 224 and 225, the band-pass filters 227 and 228, and the oscillator 226 are placed on the other surface 302, and the DC/DC block 108, which is placed on the other surface in Fig. 4B, is placed in the residual space of the surface 301. The DC/DC block 108 occupies smaller space compared to the switch circuit 118 and the FCB 224 and 225. Thus, all of the elements can be laid out within the same size as that of the circuit board of the four-output LNB on the surface 301.

On the other surface 302, the space for the DC/DC block 108 can be used. In the space, the switch circuit 128 and a group of circuit elements through which signals output from the switch circuit 128 pass are placed in a right-half area, and the switch circuit 118 and a group of circuit elements through which signals output from the switch circuit 118 pass are placed in a left-half area. The switch circuits 118 and 128 are supplied with signals from a pair of through-holes 310 and 311 provided near both edge in a center part of the circuit board 300. The layout of these circuit elements can be shifted upward because the space for the DC/DC block 108 is used. On the other surface 302, too, all of the circuit elements can be laid out within the same size as that of the circuit board of the four-output LNB.

However, the circuit layout shown in Figs. 5A and 5B has the following problems. A line 312, which leads signals from the through-hole 310 provided near the left edge in the center part of the surface 302 to the switch circuit 128 provided in the right-half area, crosses a line 313, which leads signals from the through-hole 311 provided near the right edge in the center part of the surface 302 to the switch circuit 118 provided in the left-half area, at a cross point P1. This configuration causes deterioration in isolation at the cross point P1.

Also, since the four FCBs 224, 225, 324, and 325 are aligned in the horizontal direction on the surface 302, the adjacent FCBs cannot sufficiently be isolated from each other. Accordingly, spurious easily occurs due to interference between the FCBs disadvantageously.

### SUMMARY OF THE INVENTION

The present invention has been made in view of these circumstances, and an object of the present invention is to provide a frequency converter for receiving satellite broadcast, capable of solving a problem of deterioration in isolation caused by crossing of lines to lead signals to a plurality of switch circuits, suppressing occurrence of spurious due to interference between FCBs, and realizing a circuit layout that can be accommodated in the size of an existing circuit board.

In the above-described wideband LNB, the FCBs 224 and 225 connect to first and second output terminals 118c and 118d of the first switch circuit 118, and an oscillation frequency of the FCB 224 may match an input frequency of the FCB 225, so that spurious signals occur disadvantageously at this time. Also, spurious signals occur between the FCBs 324 and 325 connected to first and second output terminals 128c and 128d of the second switch circuit 128 for the same reason.

The present invention has been made in view of this point, and an object of the present invention is to provide a frequency converter for receiving satellite broadcast, capable of preventing interference between frequency converting blocks connected via a switch circuit and having an improved spurious characteristic.

In the above-described wideband LNB, when RF signals are converted to first and second IF signals, not only a first image signal (RF Image: 7.65 GHz to 9.7 GHz) having an image frequency for the first frequency converting block (113 and 123) but also a second image signal (IF image) having an image frequency for the second frequency converting block are generated. Assuming that the second IF signals have the above-described fixed frequencies, 3.3 GHz to 6.046 GHz correspond to the second image signal (IF Image).

A low-band side (3.3 GHz) of the second image signal (IF Image) is approximate to a high-band side (2.55 GHz) of a signal band of the first IF signal, which is a satellite broadcast reception signal. If the second image signal is to be eliminated together with the first image signal (RF Image) by the band-pass filters 112 and 122, the size of the band-pass filters 112 and 122 needs to be increased.

The present invention has been made in view of this point, and an object of the present invention is to provide a frequency converter for receiving satellite broadcast, capable of removing an image frequency (IF Image) for a second frequency converting block that performs frequency conversion to generate a second IF signal without increasing the size of a filter to eliminate an image frequency (RF Image) for a first frequency converting block that performs frequency conversion to generate a first IF signal, when RF signals as satellite broadcast reception signals are converted to the first and second IF signals.

According to an aspect of the present invention, there is provided a frequency converter for receiving satellite broadcast. The frequency converter includes a first frequency converting block to obtain a first channel signal group through group conversion of first broadcast channel signals received from a satellite; a second frequency converting block to obtain a second channel signal group through group conversion of second broadcast channel signals received from the satellite; a first switch circuit including first and second input terminals to receive the first channel signal group and the second channel signal group and first and second output terminals each of which outputs one of the channel signal groups selected; a second switch circuit including third and fourth input terminals to receive the first channel signal group and the second channel signal group and third and fourth output terminals each of which outputs one of the channel signal groups selected; and third to sixth frequency converting blocks that correspond to the first to fourth output terminals of the first and second switch circuits and that convert the channel signal groups received from the corresponding output terminals to predetermined fixed frequencies, respectively. The first and second switch circuits and the third to sixth frequency converting blocks are provided on the same substrate surface. The first and second switch circuits are placed to face each other while sandwiching a line segment connecting first and second leading positions to lead the first and second channel signal groups to the substrate surface. The first switch circuit is placed so that the first and second input terminals are nearer to the line segment compared to the first and second output terminals. The second switch circuit is placed so that the third and fourth input terminals are nearer to the line segment compared to the third and fourth output terminals.

With this configuration, the fist and second switch circuits face each other to sandwich the line segment connecting the first and second leading positions to lead the first and second channel signal groups to the substrate surface. Accordingly, the orientation of the first and second switch circuits can be set so that lines do not cross each other, and deterioration in isolation due to crossing of lines can be prevented. Also, the third to sixth frequency converting blocks can be placed at four corners of a square, the first and second switch circuits being placed at the center of the square. With this arrangement, distances between adjacent frequency converting blocks are longer compared to a layout where the four frequency converting blocks are aligned along a straight line. Accordingly, occurrence of spurious due to interference between the frequency converting blocks can be suppressed.

In the above-described frequency converter for receiving satellite broadcast, the third and fourth frequency converting blocks may be placed on the same side as the first switch circuit with respect to the line segment connecting the first and second leading positions, the third and fourth frequency converting blocks being positioned on both sides of the first switch circuit. Also, the fifth and sixth frequency converting blocks may be placed on the same side as the second switch circuit with respect to the line segment connecting the first and second leading positions, the fifth and sixth frequency converting blocks being positioned on both sides of the second switch circuit.

With this configuration, the third to sixth frequency converting blocks corresponding to the first to fourth output terminals can be placed with the first and second switch circuits being the center. Accordingly, the third to sixth frequency converting blocks can be effectively isolated from each other.

In the above-described frequency converter for receiving satellite broadcast, the first and second frequency converting blocks may be provided on a substrate surface different from the substrate surface provided with the first and second switch circuits and the third to sixth frequency converting blocks.

With this configuration, the first and second frequency converting blocks are placed on one substrate surface, whereas the first and second switch circuits and the third to sixth frequency converting blocks are placed on the other substrate surface. Accordingly, the respective circuit elements constituting the frequency converter for receiving satellite broadcast can be efficiently placed on both sides of the substrate having the same size as that of an existing circuit board.

According to another aspect of the present invention, there is provided a frequency converter for receiving satellite broadcast. The frequency converter includes a first frequency converting block to obtain a first channel signal group through group conversion of first broadcast channel signals received from a satellite; a second frequency converting block to obtain a second channel signal group through group conversion of second broadcast channel signals received from the satellite; a switch circuit that selects an arbitrary channel signal group from among the first and second channel signal groups and that includes first and second output terminals each of which outputs the selected channel signal group; a third frequency converting block that corresponds to the first output terminal of the switch circuit and that converts the channel signal group received from the first output terminal to a fixed frequency; a fourth frequency converting block that corresponds to the second output terminal of the switch circuit and that converts the channel signal group received from the second output terminal to a fixed frequency; a first attenuator provided between the first output terminal of the switch circuit and the third frequency converting block; and a second attenuator provided between the second output terminal of the switch circuit and the fourth frequency converting block.

With this configuration, the first and second attenuators cause a large difference in an input level between a channel signal group input to the third and fourth frequency converting blocks and a leaked signal input from the other frequency converting block via the switch circuit, so that a spurious characteristic can be improved.

In the above-described frequency converter for receiving satellite broadcast, amplifiers to compensate for all or part of an attenuation amount in the first and second attenuators may be provided between the first frequency converting block and the switch circuit and between the second frequency converting block and the switch circuit, respectively.

With this configuration, the attenuation amount in the first and second attenuators is compensated for in the previous stage of the switch circuit. This causes a larger difference in the input level between the channel signal group and the leaked signal, so that the spurious characteristic can be further improved.

In the above-described frequency converter for receiving satellite broadcast, an amplifier may be provided after a mixer to mix signals output from the third and fourth frequency converting blocks, and an attenuation amount corresponding to part of an amplification amount in the amplifier may be added to the attenuation amount in the first and second attenuators so as to maintain a total gain.

With this configuration, signals are amplified after the third and fourth frequency converting blocks, so that a distortion characteristic can be improved.

The frequency converter for receiving satellite broadcast may further include a first wideband amplifier connected in series to the first attenuator, the first wideband amplifier being provided between the switch circuit and the third frequency converting block; and a second wideband amplifier connected in series to the second attenuator, the second wideband amplifier being provided between the switch circuit and the fourth frequency converting block.

With this configuration, the first and second wideband amplifiers can amplify a channel signal group input from the switch circuit to the third frequency converting block and attenuate a signal leaked from the third frequency converting block to a fourth frequency converting block. Accordingly, a large difference in input level between a channel signal group in an input stage of the third and fourth frequency converting blocks and a leaked signal can be obtained.

According to another aspect of the present invention, there is provided a frequency converter for receiving satellite broadcast. The frequency converter includes a first frequency converting block to convert satellite broadcast reception signals to a channel signal group of an intermediate frequency band; a second frequency converting block to convert the channel signal group to a predetermined fixed frequency; and an attenuation circuit to attenuate a frequency band corresponding to image frequencies for the second frequency converting block, the attenuation circuit being provided between the first and second frequency converting blocks.

With this configuration, since the attenuation circuit to attenuate the frequency band of image frequencies for the second frequency converting block is provided between the first and second frequency converting blocks, the image frequencies (IF Image) for the second frequency converting block can be attenuated without increasing the size of a band-pass filter to eliminate image frequencies (RF Image) for the first frequency converting block before the first frequency converting block.

In the above-described frequency converter for receiving satellite broadcast, the attenuation circuit may include a band-elimination filter.

With this configuration, the image frequencies (IF Image) for the second frequency converting block can be eliminated by the band-elimination filter. Accordingly, the image frequencies (IF Image) can be sufficiently attenuated without attenuating satellite broadcast reception signals in a region where the frequency band of the satellite broadcast reception signals is approximate to the image frequencies (IF Image).

In the above-described frequency converter for receiving satellite broadcast, the attenuation circuit may include a low-pass filter.

The frequency converter for receiving satellite broadcast may further include a switch circuit including a plurality of input terminals to receive a plurality of channel signal groups and a plurality of output terminals to output the channel signal groups input to the input terminals, the switch circuit being provided between the attenuation circuit and the second frequency converting block.

With this configuration, a plurality of frequency converting blocks can be connected to the plurality of output terminals of the switch circuit, so that the channel signal group can be converted to a plurality of fixed frequencies to be output.

In the above-described frequency converter for receiving satellite broadcast, the first frequency converting block may include a plurality of first frequency converting blocks, and the switch circuit may select one of channel signal groups input from the plurality of first frequency converting blocks to the input terminals and output the selected channel signal group.

With this configuration, the plurality of first frequency converting blocks can be placed in the input stage of the switch circuit, whereas a plurality of second frequency converting blocks can be placed in the output stage of the switch circuit. Accordingly, channel signal groups from the plurality of first frequency converting blocks can be received by the switch circuit, and a selected channel signal group can be output to the plurality of frequency converting blocks in the subsequent stage.

According to the present invention, deterioration in isolation caused by crossing of lines to lead signals to a plurality of switch circuits can be prevented, occurrence of spurious due to interference between frequency converting blocks can be suppressed, and a circuit layout that can be accommodated in the size of an existing circuit board can be realized.

Also, according to the present invention, interference between frequency converting blocks connected via a switch circuit can be prevented in a wideband LNB, and a spurious characteristic can be improved.

Also, according to the present invention, a second image signal (IF Image) can be eliminated without increasing the size of a band-pass filter to eliminate a first image signal (RF Image).

### BRIEF DESCRIPTION OF THE DRAWINGS

Fig. 1A is a plan view showing a first circuit board surface of a wideband LNB according to a first embodiment of the present invention;
Fig. 1B is a plan view showing a second circuit board surface of the wideband LNB according to the first embodiment of the present invention;
Fig. 2A is a partial enlarged view of the second circuit board surface shown in Fig. 1B;
Fig. 2B is a partial enlarged view of the circuit board surface shown in Fig. 5B;
Fig. 3 shows a circuit configuration of a wideband LNB according to a known art;
Figs. 4A and 4B show a circuit layout of the wideband LNB shown in Fig. 3;
Figs. 5A and 5B show another circuit layout of the wideband LNB shown in Fig. 3;
Fig. 6 shows a circuit configuration of a wideband LNB according to a second embodiment of the present invention;
Fig. 7 shows a circuit configuration of the wideband LNB in which setting of gain is partly changed in the second embodiment;
Fig. 8 shows a circuit configuration of a wideband LNB according to a modification of the second embodiment;
Fig. 9 shows a circuit configuration of a wideband LNB according to another modification of the second embodiment;
Fig. 10 shows a circuit configuration of the wideband LNB shown in Fig. 3 together with a gain setting state;
Fig. 11 shows a configuration of a wideband LNB according to a third embodiment of the present invention;
Fig. 12A shows a frequency characteristic of an RF signal passed through a high-pass filter in the third embodiment;
Fig. 12B shows a frequency characteristic of an RF signal passed through a band-pass filter in the third embodiment;
Fig. 13A shows a frequency characteristic of an IF signal passed through an RF mixer in the third embodiment;
Fig. 13B shows a frequency characteristic of an IF signal passed through a band-elimination filter in the third embodiment;
Fig. 14 shows a configuration of a band-pass filter including an interdigital filter;
Fig. 15 shows a configuration of a band-elimination filter including a lumped-constant LC filter;
Fig. 16 shows a configuration of a band-elimination filter including a distributed-constant LC filter; and
Fig. 17 shows a circuit configuration of a known LNB.

### DESCRIPTION OF THE PREFERRED EMBODIMENTS

Hereinafter, a first embodiment of the present invention is described in detail with reference to the attached drawings.

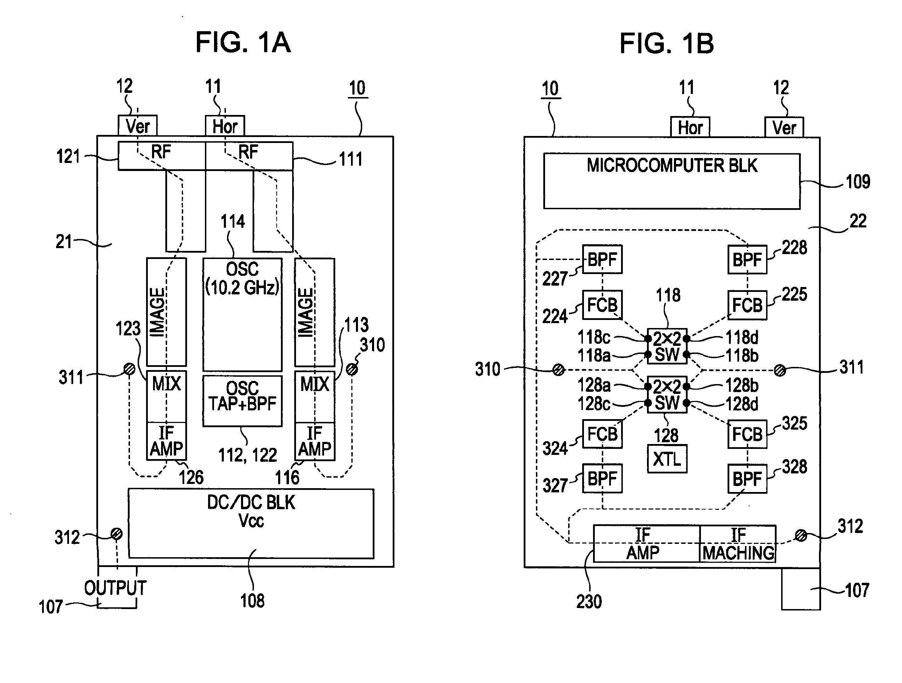

Figs. 1A and 1B are plan views showing a circuit layout of a first circuit board surface and a second circuit board surface in a wideband LNB (low-noise block converter) according to this embodiment. The wideband LNB according to this embodiment has the same configuration as that of the wideband LNB shown in Fig. 3, but the circuit layout thereof is different.

Fig. 1A shows the circuit layout on the first circuit board surface 21 and Fig. 1B shows the circuit layout on the second circuit board surface 22. The circuit layout on the first circuit board surface 21, which is one of surfaces of a circuit board 10, is the same as that shown in Fig. 5A described above. That is, the first circuit board surface 21 is provided with circuit elements and lines from input ports 11 and 12 to receive horizontal polarization signals H and vertical polarization signals V to intermediate frequency amplifiers 116 and 126, and a DC/DC block 108 is placed thereunder. On the first circuit board surface 21, a through-hole 312 is provided beside the DC/DC block 108, so that signals led from the second circuit board surface 22 via the through-hole 312 to the first circuit board surface 21 are input to an output port 107.

Fig. 1B shows the circuit layout on the second circuit board surface 22, which is the other surface of the circuit board 10. Respective circuit elements placed on the second circuit board surface 22 are the same as those in the circuit layout shown in Fig. 5B, and thus are denoted by the same reference numerals.

In this embodiment, circuit elements are symmetrically placed with the center being a line segment passing through-holes 310 and 311 that are provided as signal leading positions on both sides of an almost center part of the second circuit board surface 22. A first switch circuit 118 is placed in a center part of the second circuit board surface 22, above the line segment passing the through-holes 310 and 311 as the signal leading positions. In the first switch circuit 118, a left side provided with a first input terminal 118a and a first output terminal 118c faces the side of the through-hole 310 that leads horizontal polarization signals H from the first circuit board surface 21. Also, in the switch circuit 118, a right side provided with a second input terminal 118b and a second output terminal 118d faces the side of the through-hole 311 that leads vertical polarization signals V from the first circuit board surface 21. The first and second input terminals 118a and 118b are positioned near the center relative to the first and second output terminals 118c and 118d.

On the other hand, a second switch circuit 128 is placed in a center part of the second circuit board surface 22, below the line segment passing the through-holes 310 and 311 as the signal leading positions. In the second switch circuit 128, a left side provided with a third input terminal 128a and a third output terminal 128c faces the side of the through-hole 310 that leads horizontal polarization signals H from the first circuit board surface 21. Also, in the switch circuit 128, a right side provided with a fourth input terminal 128b and a fourth output terminal 128d faces the side of the through-hole 311 that leads vertical polarization signals V from the first circuit board surface 21. The third and fourth input terminals 128a and 128b are positioned near the center relative to the third and fourth output terminals 128c and 128d.

As described above, the first and second switch circuits 118 and 128 are placed so as to sandwich the line segment passing the through-holes 310 and 311. The left sides of the switch circuits 118 and 128 provided with the first and third input terminals 118a and 128a to receive horizontal polarization signals H face the side of the through hole 310 that leads horizontal polarization signals H. On the other hand, the right sides of the switch circuits 118 and 128 provided with the second and fourth input terminals 118b and 128b to receive vertical polarization signals V face the side of the through hole 311 that leads vertical polarization signals V. Accordingly, lines can be laid out without crossing them unlike in the circuit layout shown in Fig. 5B, so that a problem of deterioration in isolation can be solved.

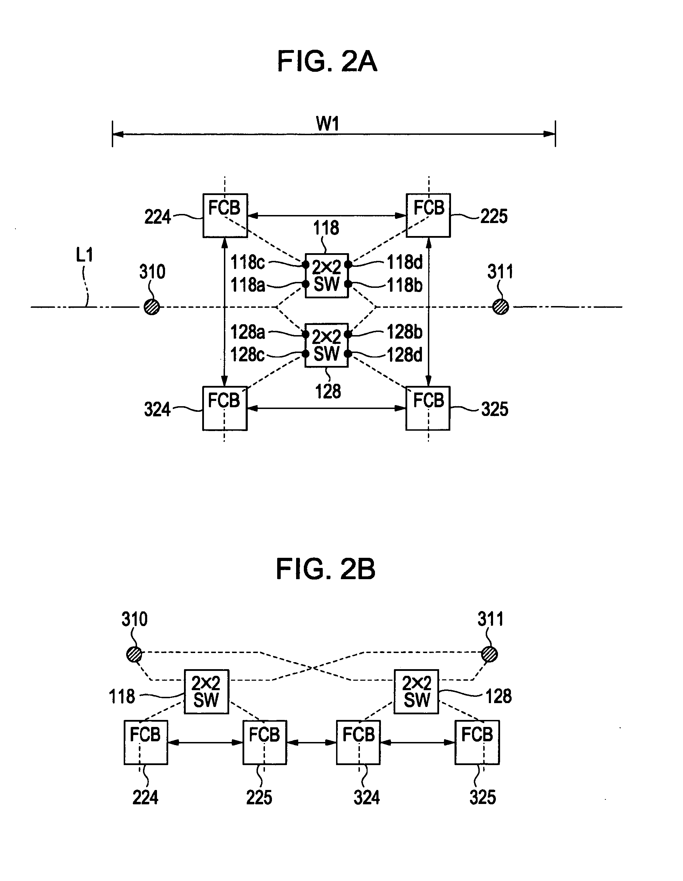

Fig. 2A shows a position relationship among the first and second switch circuits 118 and 128 and four FCBs 224, 225, 324, and 325 serving as third to sixth frequency converting blocks. As distances between the four FCBs 224, 225, 324, and 325 are longer, an effect of suppressing occurrence of spurious enhances. In this embodiment, the four FCBs 224, 225, 324, and 325 are placed at four corners of a square, the first and second switch circuits 118 and 128 being placed at the center of the square. More specifically, the FCB 224 that receives a signal output from the first output terminal 118c of the first switch circuit 118 placed above a line segment L1 is placed at the upper-left corner of the square, and the FCB 225 that receives a signal output from the second output terminal 118d of the first switch circuit 118 is placed at the upper-right corner of the square. The FCB 324 that receives a signal output from the third output terminal 128c of the second switch circuit 128 placed below the line segment L1 is placed at the lower-left corner of the square, and the FCB 325 that receives a signal output from the fourth output terminal 128d of the second switch circuit 128 is placed at the lower-right corner of the square. When the points where the four FCBs 224, 225, 324, and 325 are placed define a square, the distances between the FCBs adjacent to each other vertically or horizontally are equal to each other. However, the distances need not always be equal to each other if the FCBs are isolated from each other so that spurious can be sufficiently suppressed.

Fig. 2B shows a position relationship among the first and second switch circuits 118 and 128 and the four FCBs 224, 225, 324, and 325 in the circuit layout shown in Fig. 5B. As is clear from comparison with the circuit layout (Fig. 2A) according to this embodiment, the four FCBs need to be placed within a distance W1 in the horizontal direction on the circuit board surface in Fig. 2B, whereas two FCBs are placed within the distance W1 in this embodiment. Therefore, according to this embodiment, the distances between horizontally adjacent FCBs (224 and 225) (324 and 325) on the second circuit board surface 22 can be substantially doubled compared to the circuit layout shown in Fig. 5B. Accordingly, interference between the horizontally adjacent FCBs (224 and 225) (324 and 325) does not occur and occurrence of spurious can be prevented. Furthermore, since the vertically adjacent FCBs (224 and 324) (225 and 325) on the second circuit board surface 22 are isolated from each other by almost the same distance as in the horizontal direction, with the line segment L1 therebetween. Accordingly, interference between the vertically adjacent FCBs can be prevented and occurrence of spurious can be sufficiently suppressed.

As described above, the first switch circuit 118 and the FCBs 224 and 225 receiving signals from the first switch circuit 118 are symmetrically placed with respect to the second switch circuit 128 and the FCBs 324 and 325 receiving signals from the second switch circuit 128, with the line segment L1 connecting the through-holes 310 and 311 as signal leading positions therebetween. With this arrangement, the four FCBs 224, 225, 324, and 325 can be isolated so that the respective FCBs do not interfere with each other, and occurrence of spurious can be sufficiently suppressed.

Band-pass filters 227 and 228 are placed in a space above the FCBs 224 and 225 placed above the line segment L1 connecting the through-holes 310 and 311 as signal leading positions. Also, band-pass filters 327 and 328 are placed in a space below the FCBs 324 and 325 placed below the line segment L1 connecting the through-holes 310 and 311.

According to this embodiment, the first and second switch circuits 118 and 128 are placed in the center part of the second circuit board surface 22 so as to sandwich the line segment L1 passing the through-holes 310 and 311 as signal leading positions, and the first switch circuit 118 and the FCBs 224 and 225 are symmetrically placed with respect to the second switch circuit 128 and the FCBs 324 and 325. With this arrangement, the through-holes 310 and 311 can be connected to the input terminals 118a, 118b, 128a, and 128b of the switch circuits 118 and 128 without crossing lines, so that deterioration in isolation can be prevented. Also, spurious caused by interference among the FCBs 224, 225, 324, and 325 can be sufficiently suppressed.

Hereinafter, a second embodiment of the present invention is described in detail with reference to the attached drawings.

Fig. 6 shows a circuit configuration of a wideband LNB according to the second embodiment of the present invention. In the wideband LNB according to this embodiment, a first attenuator 1011 is provided between a first output terminal 1118a of a first switch circuit 1118 and an FCB0 1119, and a second attenuator 1012 is provided between a second output terminal 1118b and an FCB1 1120. Also, a third attenuator 1013 is provided between a third output terminal 1138a of a second switch circuit 1138 and an FCB2 1139, and a fourth attenuator 1014 is provided between a fourth output terminal 1138b and an FCB3 1140.

The first attenuator 1011 attenuates a local oscillation signal leaked from the FCB0 to a line on the first switch circuit 1118 side when an oscillator included in the FCB0 oscillates by a predetermined attenuation amount, and also attenuates a channel signal group input to the FCB0 from the first output terminal 1118a of the first switch circuit 1118 by the same attenuation amount. The second attenuator 1012 attenuates a local oscillation signal leaked from the FCB1 to a line on the first switch circuit 1118 side when an oscillator included in the FCB1 oscillates by a predetermined attenuation amount, and also attenuates a channel signal group input to the FCB1 from the second output terminal 1118b of the first switch circuit 1118 by the same attenuation amount, as the first attenuator 1011.

The third attenuator 1013 attenuates a local oscillation signal leaked from the FCB2 to a line on the second switch circuit 1138 side when an oscillator included in the FCB2 oscillates by a predetermined attenuation amount, and also attenuates a channel signal group input to the FCB2 from the third output terminal 1138a of the second switch circuit 1138 by the same attenuation amount. The fourth attenuator 1014 attenuates a local oscillation signal leaked from the FCB3 to a line on the second switch circuit 1138 side when an oscillator included in the FCB3 oscillates by a predetermined attenuation amount, and also attenuates a channel signal group input to the FCB3 from the fourth output terminal 1138b of the second switch circuit 1138 by the same attenuation amount, as the third attenuator 1013.

In this embodiment, a signal level of a local oscillation signal leaked from the FCB0 to the line on the first switch circuit 1118 side is attenuated by the first and second attenuators 1011 and 1012 so that the signal level of the leaked local oscillation signal becomes sufficiently low relative to a signal level of a broadcast channel signal input to the FCB1. Accordingly, occurrence of spurious in the FCB1 can be suppressed. On the other hand, a signal level of a local oscillation signal leaked from the FCB1 to the line on the first switch circuit 1118 side is attenuated by the second and first attenuators 1012 and 1011 so that the signal level of the leaked local oscillation signal becomes sufficiently low relative to a signal level of a broadcast channel signal input to the FCB0. Accordingly, occurrence of spurious in the FCB0 can be suppressed. Likewise, a local oscillation signal leaked from the FCB2 or the FCB3 to the line on the second switch circuit 1138 side is attenuated by the third and fourth attenuators 1013 and 1014 so that the signal level of the leaked local oscillation signal becomes sufficient low relative to that of a broadcast channel signal. Accordingly, occurrence of spurious in the FCB2 or the FCB3 can be suppressed.

Herein, the first to fourth attenuators 1011 to 1014 also attenuate signal levels of broadcast channel signals output from first and second mixers 1113 and 1133. In this embodiment, in order to compensate for an attenuation amount of the broadcast channel signals in the first to fourth attenuators 1011 to 1014, first and second amplifiers 1116 and 1136 provided before the first and second switch circuits 1118 and 1138 amplify the signal levels by the attenuation amount in advance.

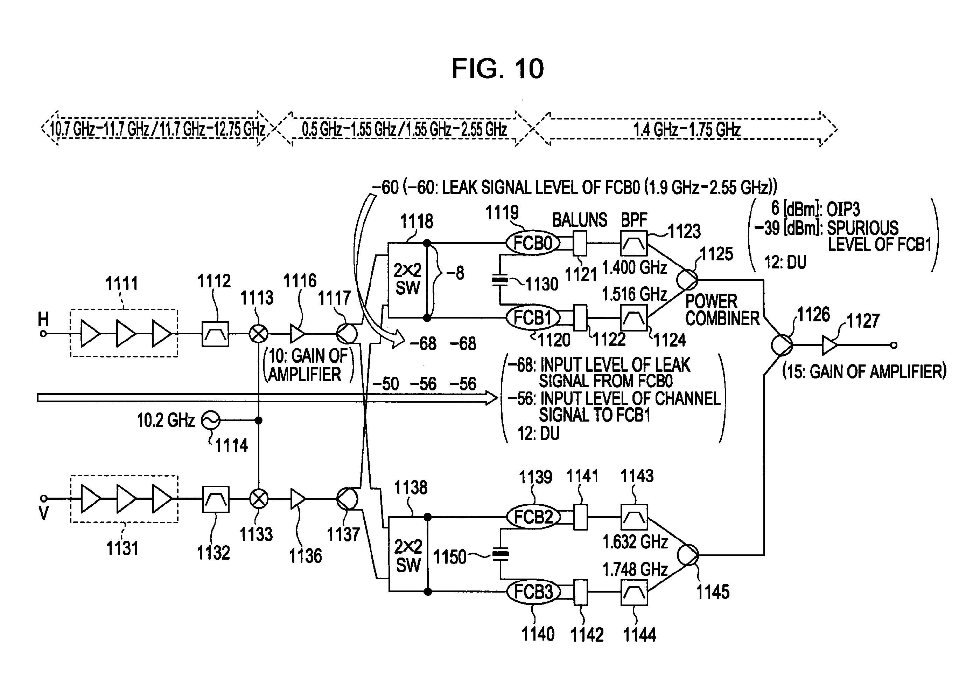

Now, a gain in the first to fourth attenuators 1011 to 1014 (attenuation factor) and a gain in the amplifiers 1116 and 1136 (amplification factor) are specifically described by comparing a case where the first to fourth attenuators 1011 to 1014 are provided (Fig. 6) and a case where the attenuators are not provided (Fig. 10).

Signal levels of a broadcast channel signal input to the FCB1 and a local oscillation signal leaked from the FCB0 are examined. In Fig. 10, the amplifiers 1116 and 1136 raise a signal level of an input signal by 10 dB. The first switch circuit 1118 includes a circuit element in which an attenuation between input and output terminals is 6 dB at the maximum and an attenuation between the first and second output terminals 1118a and 1118b is 8 dB at the maximum. Also, specifications of respective circuit elements, including the gain (10 dB) of the amplifiers 1116 and 1136, are determined so that an input level of a broadcast channel signal becomes -50 dBm in an input stage of the first switch circuit 1118 if the input level of the broadcast channel signal input to the wideband LNB is -90 dBm. Also, each of the FCB0 and the FCB1 includes a circuit element in which a leak level to the line on the first switch circuit 1118 side is -60 dBm at the maximum.

In the wideband LBN without attenuators shown in Fig. 10, a broadcast channel signal is attenuated by 6 dB in the first switch circuit 1118, and the level of the signal becomes -56 dBm when the signal is input to the FCB1 from the second output terminal 1118b. On the other hand, a local oscillation signal leaked from the FCB0 to the line on the first switch circuit 1118 side attenuates by 8 dB while passing between the first and second output terminals 1118a and 1118b of the first switch circuit 1118, so that the level of the signal becomes -68 dBm. That is, the broadcast channel signal input to the FCB1 and the leaked local oscillation signal have a level difference of 12 dB. It is generally known that a difference of at least 20 dB is necessary in order to prevent a trouble caused by a leaked local oscillation signal in the FCB1.

On the other hand, in the wideband LNB according to this embodiment, an attenuation amount is set to 10 dB in the first to fourth attenuators 1011 to 1014, and an amplification amount is set to 20 dB in the amplifiers 1116 and 1136. That is, compared to the wideband LNB without attenuators shown in Fig. 10, in which an amplification amount is set to 10 dB in the first and second amplifiers 1116 and 1136, this embodiment sets an amplification amount to 20 dB so that the attenuation amount in the first and second attenuators 1011 and 1012 (10 dB) is compensated for.

As shown in Fig. 6, when an input level of a broadcast channel signal input to the wideband LNB according to this embodiment is -90 dBm, the level of the broadcast channel signal rises by 20 dB, which is higher than in the case shown in Fig. 10, in the amplifier 1116 or 1136. Thus, the level becomes -40 dBm in the input stage of the first switch circuit 1118. Then, the level is attenuated by 6 dB in the first switch circuit 1118, so that the level becomes -46 dBm when the signal is output from the second output terminal 1118b. Furthermore, the level is attenuated by 10 dB when the signal passes through the second attenuator 1012, so that the level becomes -56 dBm in the input stage of the FCB1. On the other hand, the local oscillation signal leaked from the FCB0 to the line on the first switch circuit 1118 side is attenuated by 10 dB in the attenuator 1011, so that the level thereof becomes -70 dBm, and is further attenuated by 8 dB when passing between the first and second output terminals 1118a and 1118b of the first switch circuit 1118, so that the level becomes -78 dBm. Furthermore, the signal is attenuated by 10 dB in the second attenuator 1012, so that the input level of the leaked local oscillation signal to the FCB1 is - 88 dBm. That is, the broadcast channel signal input to the FCB1 and the leaked local oscillation signal have a level difference of 32 dB. In this case, a level difference of 20 dB or more, which is desirable to prevent a trouble, can be ensured, and thus a trouble in the FCB1 caused by a local oscillation signal leaked from the FCB0 can be prevented.

Likewise, in the FCB0, the FCB2, and the FCB3, a broadcast channel signal input to the FCB0, the FCB2, and the FCB3 and a leaked local oscillation signal have a level difference of 32 dB. Accordingly, a trouble due to spurious does not occur even if the leaked local oscillation signal is input to the FCB1.

In this embodiment, the first to fourth attenuators 1011 to 1014 are provided between the output terminals of the first and second switch circuits 1118 and 1138 and the input stages of the corresponding FCB0 to FCB3. In this configuration, by adjusting the gain of the first to fourth attenuators 1011 to 1014, the gain of the amplifiers 1116 and 1136 provided on the input stage sides of the first and second switch circuits 1118 and 1138, and the gain of an IF amplifier 1127 provided on the output stage side of the FCB0 to FCB3, a spurious characteristic can be further improved and an OIP3 (intercept point on the output side) of the wideband LNB can be improved.

In the wideband LNB shown in Fig. 6, the gain of the IF amplifier 1127 is set so that a signal output from a mixer 1126 is amplified by 15 dB. If the above-described gain setting is performed on the entire wideband LNB, the OIP3 of the wideband LNB is 6 dBm. In the present circumstances, a recommended value of the OIP3 of the LNB is about 15 dBm. Thus, the OIP3 of the wideband LNB according to this embodiment needs to be improved.

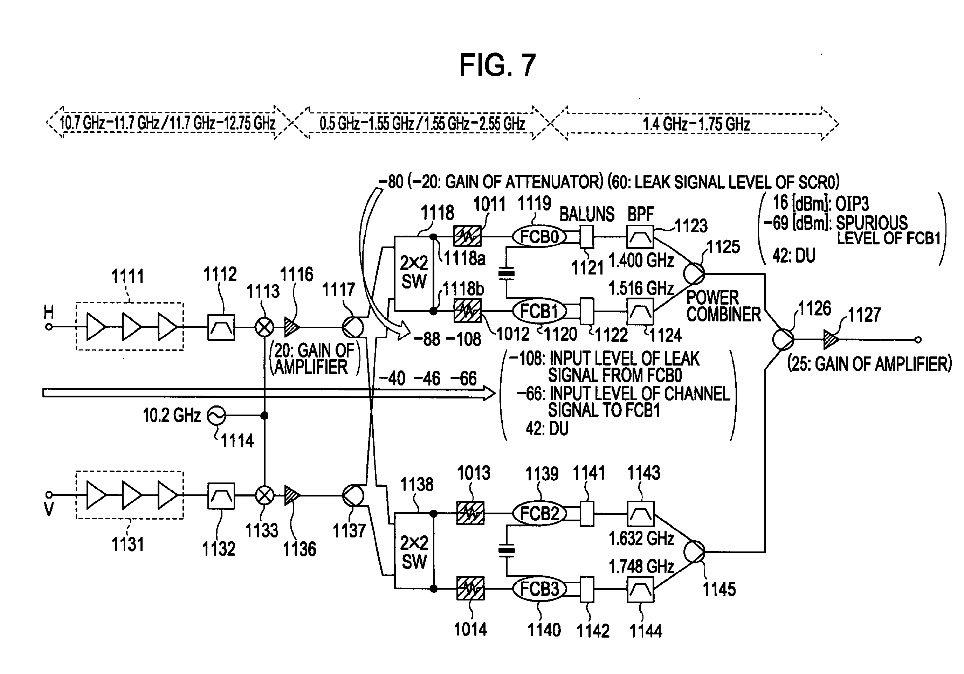

In this embodiment, as shown in Fig. 7, the gain of the IF amplifier 1127 is raised from 15 dB (Fig. 6) to 25 dB, and the gain raised in the IF amplifier 1127 is dropped by 10 dB in the first to fourth attenuators 1011 to 1014. Accordingly, the gain is compensated for in the input stages of the FCB0 to FCB3.

In the wideband LNB having the gain setting shown in Fig. 7, a local oscillation signal (-60 dBm) leaked from the FCB0 to the line on the first switch circuit 1118 side is attenuated by 20 dB in the first attenuator 1011, is attenuated by 8 dB while passing between the first and second output terminals 1118a and 1118b of the first switch circuit 1118, and is attenuated by 20 dB in the second attenuator 1012. Accordingly, the input level to the FCB1 is -108 dBm. On the other hand, the input level of a broadcast channel signal input to the first switch circuit 1118 is -40 dBm. The signal is attenuated by 6 dB while passing between the input and output terminals of the first switch circuit 1118 and is attenuated by 20 dB in the second attenuator 1012. Thus, the input level to the FCB1 is -66 dBm. In this case, the broadcast channel signal input to the FCB1 (-66 dBm) and the leaked local oscillation signal (-108 dBm) have an input level difference of 42 dB, so that an improved spurious characteristic can be obtained compared to the gain setting shown in Fig. 6.

Also, signals that are frequency-converted by the FCB0 to FCB3 and passed through baluns 1121, 1122, 1141, and 1142 and band-pass filters 1123, 1124, 1143, and 1144 are mixed by mixers 1125 and 1145. The signals generated accordingly are amplified by 25 dB in the IF amplifier 1127. In this way, the gain of the IF amplifier 1127 is lager by 10 dB (25 dB - 15 dB) than the gain set in Fig. 6. Thus, the OIP3 is 16 dBm, which is sufficiently higher than the recommended value (15 dBm), so that the OIP3 is improved and a favorable distortion characteristic can be obtained.

As described above, the OIP3 can be improved by raising the gain of the IF amplifier 1127 provided in the output stage of the FCB0 to FCB3. By placing the first to fourth attenuators 1011 to 1014 in the output stages of the first and second switch circuits 1118 and 1138 and before the input stages of the FCB0 to FCB3, an increase in gain of the IF amplifier 1127 can be compensated for by an increase in attenuation of the attenuators, and the spurious characteristic can be improved.

The above described gain setting values are only examples. The values can be arbitrarily set as long as the spurious characteristic can be improved and/or the OIP3 can be improved.

In the above description, the first to fourth attenuators 1011 to 1014 and the IF amplifiers 1116, 1136, and 1127 are used in combination in order to ensure differences in input level between broadcast channel signals input to the FCB0 to FCB3 and leaked local oscillation signals. However, the present invention is not limited to this configuration.

For example, series circuits respectively including the first to fourth attenuators 1011 to 1014 and wideband amplifiers can be provided between the output stages of the first and second switch circuits 1118 and 1138 and the input stages of the FCB0 to FCB3. In this configuration, too, the same advantage can be obtained.

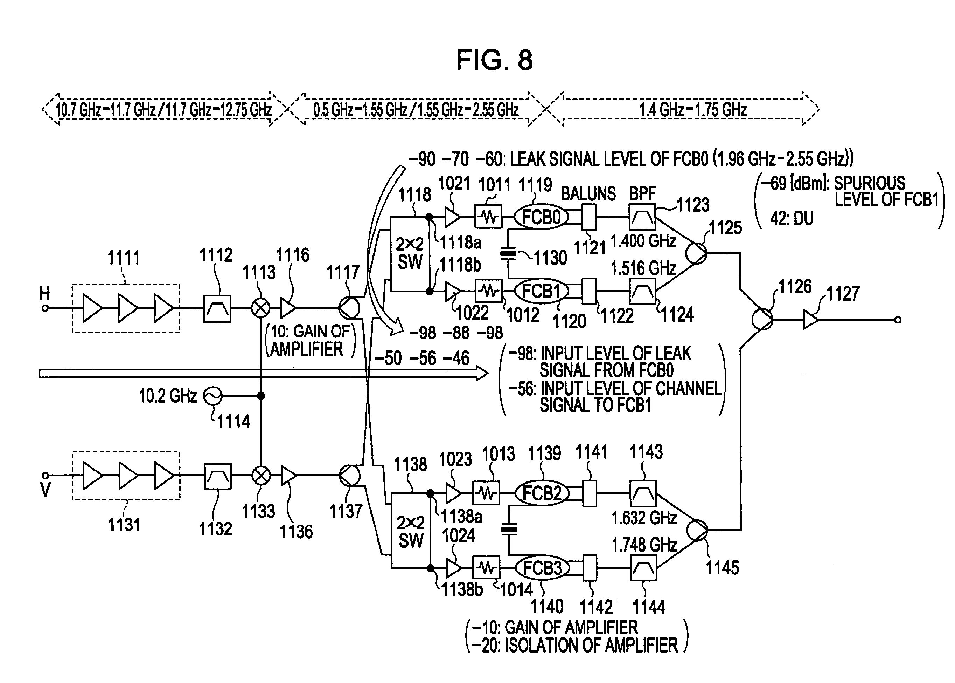

Fig. 8 shows a modification. In this modification, first to fourth wideband amplifiers 1021 to 1024 are provided between the output stages of the first and second switch circuits 1118 and 1138 and the input stages of the FCB0 to FCB3, that is, before the first to fourth attenuators 1011 to 1014.

In the modification shown in Fig. 8, the signal level of input signals of the first to fourth wideband amplifiers 1021 to 1024 is raised by 10 dB, and isolation between output and input terminals is -20 dB. That is, when signals are input to the output terminal sides of the first to fourth wideband amplifiers 1021 to 1024 and are output from the input terminal sides thereof, the respective signals are attenuated by -20 dB. The gain of the IF amplifiers 1116 and 1136 provided between the mixers 1113 and 1133 and the input stages of the first and second switch circuits 1118 and 1138 is 10 dB, as in the example shown in Fig. 10 according to the known art.

In the above-described modification, when an input level of a broadcast channel signal is -90 dBm, the broadcast channel signal is amplified by the amplifier 1116 or 1136 with the same gain as in the case shown in Fig. 10, and the level of the signal becomes -50 dBm in the input stage of the first switch circuit 1118. The signal is attenuated by 6 dB in the first switch circuit 1118, so that the level thereof becomes -56 dBm in the stage of being output from the second output terminal 1118b. Furthermore, the signal is amplified by the second wideband amplifier 1022 to -46 dBm, and is attenuated by 10 dB by passing through the second attenuator 1012, so that the signal level becomes -56 dBm in the input stage of the FCB1.

On the other hand, a local oscillation signal leaked from the FCB0 to the line on the first switch circuit 1118 side is attenuated by 10 dB by the first attenuator 1011 to - 70 dBm, and is further attenuated by 20 dB by the first wideband amplifier 1021 provided in this modification to -90 dBm. Then, the signal is attenuated by 8 dB while passing between the first and second output terminals 1118a and 1118b of the first switch circuit 1118, so that the signal level becomes -98 dBm. Compared to the case shown in Fig. 7, where the attenuation amount is twice larger than in this modification, the level of the leaked local oscillation signal in the second output terminal 1118b of the first switch circuit 1118 can be decreased. The leaked local oscillation signal is amplified by the second wideband amplifier 1022, but the signal can maintain a low level of - 88 dBm. Furthermore, the signal is attenuated by 10 dB by the second attenuator 1012, and thus is input to the FCB1 in a very low level of -98 dBm.

Accordingly, in this modification, 42 dB can be ensured as a difference in level between the broadcast channel signal input to the FCB1 and the leaked local oscillation signal. Since a level difference of 20 dB or more, which is desirable to prevent a trouble, is ensured, a trouble in the FCB1 due to a local oscillation signal leaked from the FCB0 can be prevented. The same level difference can be ensured between a broadcast channel signal input to the FCB0, the FCB2, or the FCB3 and a leaked local oscillation signal.

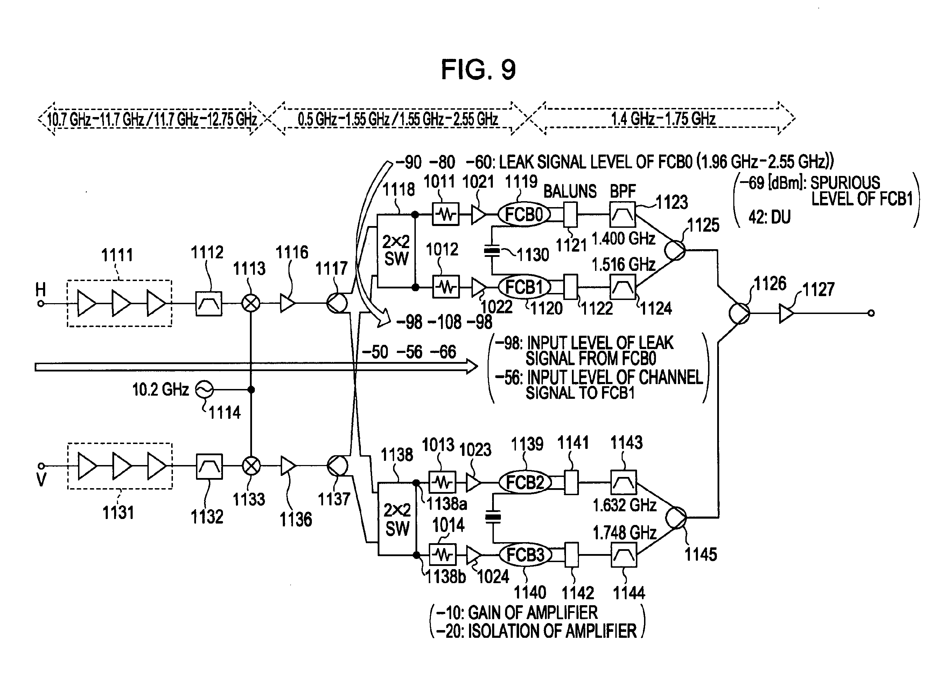

In the modification shown in Fig. 8, the first to fourth wideband amplifiers 1021 to 1024 are provided before the first to fourth attenuators 1011 to 1014. If the first to fourth wideband amplifiers 1021 to 1024 are provided after the first to fourth attenuators 1011 to 1014, as shown in Fig. 9, the level difference of 42 dB can be ensured as a level difference between a broadcast channel signal and a leaked local oscillation signal in the input stages of the FCB0 to FCB3, as in the above-described example.

In the above description, the wideband LNB including the four FCBs (FCBO to FCB3) is described as an example. However, the present invention can also be applied to an LNB including two FCBs (e.g., FCB0 and FCB1), that is, a system on the first switch circuit 1118 side. Alternatively, the wideband LNB may include the FCB0 to FCB3, and attenuators may be provided on only one side of the first switch circuit 1118 and the second switch circuit 1138.

Hereinafter, a third embodiment according to the present invention is described in detail with reference to the attached drawings.

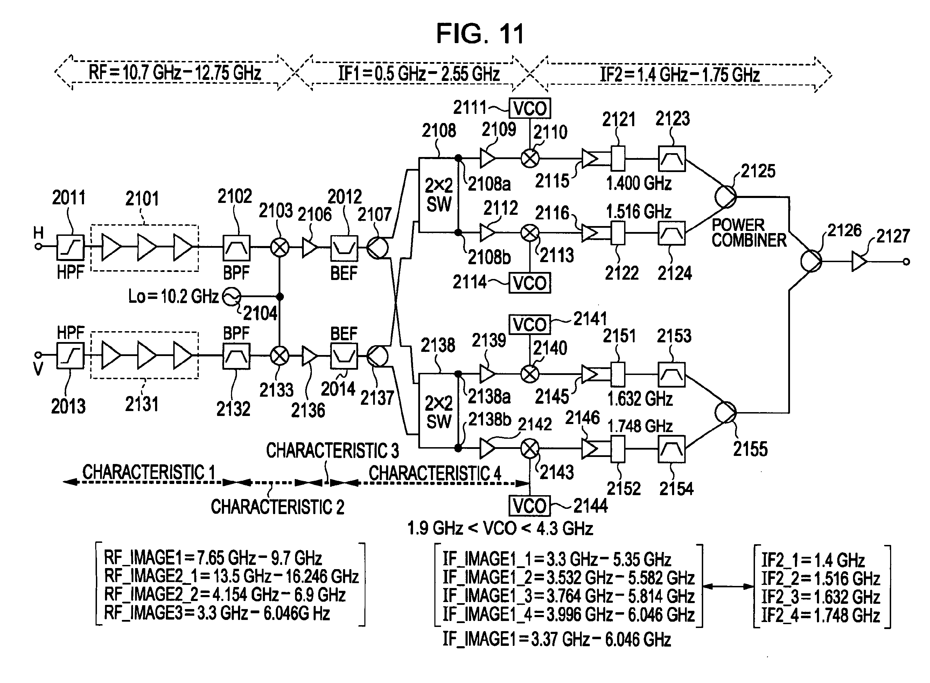

Fig. 11 shows an entire configuration of a wideband LNB according to the third embodiment of the present invention.

In the wideband LNB according to this embodiment, a horizontal polarization signal H from which a first image signal (RF Image) is eliminated in a band-pass filter 2102 in an input line of the horizontal polarization signal H is converted to a first IF signal in an RF mixer 2103 serving as a first frequency converting block. Also, a vertical polarization signal V from which a first image signal (RF Image) is eliminated in a band-pass filter 2132 in an input line of the vertical polarization signal V is converted to a first IF signal in an RF mixer 2133 serving as the first frequency converting block. The first IF signals relating to the horizontal and vertical polarization signals H and V output from a first switch circuit 2108 are converted to second IF signals of fixed frequencies in IF mixers 2110 and 2113 serving as a second frequency converting block. Also, the first IF signals relating to the horizontal and vertical polarization signals H and V output from a second switch circuit 2138 are converted to second IF signals of fixed frequencies in IF mixers 2140 and 2143 serving as the second frequency converting block. The four second IF signals converted to respective specific fixed frequencies are combined and the composite signal is output from an output port to a cable. In this embodiment, as in the wideband LNB shown in Fig. 3, the RF mixers 2103 and 2133 serving as the first frequency converting block convert RF signals to first IF signals, and the IF mixers 2110, 2113, 2140, and 2143 serving as the second frequency converting block convert the first IF signals to second IF signals of fixed frequencies, and the second IF signals are combined into a composite signal. The composite signal is output from a cable.

In this embodiment, in the input line for horizontal polarization signals H, a high-pass filter 2011 is provided before a low-noise amplifier 2101, and a band-elimination filter 2012 to eliminate a second image signal (IF Image) is provided after the RF mixer 2103 and before a distributor 2107. Likewise, in the input line for vertical polarization signals V, a high-pass filter 2013 is provided before a low-noise amplifier 2131, and a band-elimination filter 2014 to eliminate a second image signal (IF Image) is provided after the RF mixer 2133 and before a distributor 2137.

Now, the first and second image signals that appear in the wideband LNB according to this embodiment are described in detail. Assume that, as shown in Fig. 11, RF signals input as satellite broadcast reception signals are horizontal polarization signals H and vertical polarization signals V of 10.7 GHz to 12.75 GHz. Also, assume that a local oscillation signal Lo by which the RF signals are multiplied in the RF mixers 2103 and 2133 serving as the first frequency converting block has 10.2 GHz, and that the first IF signals as first and second channel signal groups have 0.5 GHz to 2.55 GHz. When a first IF signal has 0.5 GHz to 2.55 GHz and when a local oscillation signal Lo has 10.2 GHz, a frequency band that is outside of the frequency band of the satellite broadcast reception signals (10.7 GHz to 12.75 GHz) and that can be converted to the frequency band of the first IF signal (0.5 GHz to 2.55 GHz), that is, an image band corresponding to image frequencies (RF Image) for the first frequency converting block (2103 and 2133), is 7.65 GHz to 9.7 GHz. This image band is called "RF Image 1".

Also, assume that fixed frequencies obtained by multiplying the first IF signals by local oscillation signals in the IF mixers 2110, 2113, 2140, and 2143 serving as the second frequency converting block are 1.400 GHz, 1.516 GHz, 1.632 GHz, and 1.748 GHz. When the local oscillation signals by which the first IF signals are multiplied have 1.9 GHz to 4.3 GHz, a frequency band that is outside of the frequency band of the first IF signals (0.5 GHz to 2.55 GHz) and that can be converted to the above-described respective fixed frequencies, that is, an image band corresponding to image frequencies (IF Image) for the second frequency converting block (2110, 2113, 2140, and 2143), is as follows: 3.3 GHz to 5.35 GHz for the fixed frequency 1.400 GHz; 3.532 GHz to 5.582 GHz for the fixed frequency 1.516 GHz; 3.764 GHz to 5.814 GHz for.the fixed frequency 1.632 GHz; and 3.996 GHz to 6.046 GHz for the fixed frequency 1.748 GHz. These image bands are called "IF Image 1_1", "IF Image 1_2", "IF Image 1_3", and "IF Image 1_4", in the order. The entire image band from the minimum frequency 3.3 GHz to the maximum frequency 6.046 GHz to generate the above-described second image signal is the image band for the second IF signals. This image band is called "IF Image 1".

In the RF mixers 2103 and 2133 serving as the first frequency converting block, the frequency bands that can be converted to the second image signal (IF Image 1: 3.3 GHz to 6.046 GHz) are 13.5 GHz to 16.246 GHz and 4.154 GHz to 6.9 GHz. The former frequency band is called "RF Image 2_1" and the latter frequency band is called "RF Image 2_2".

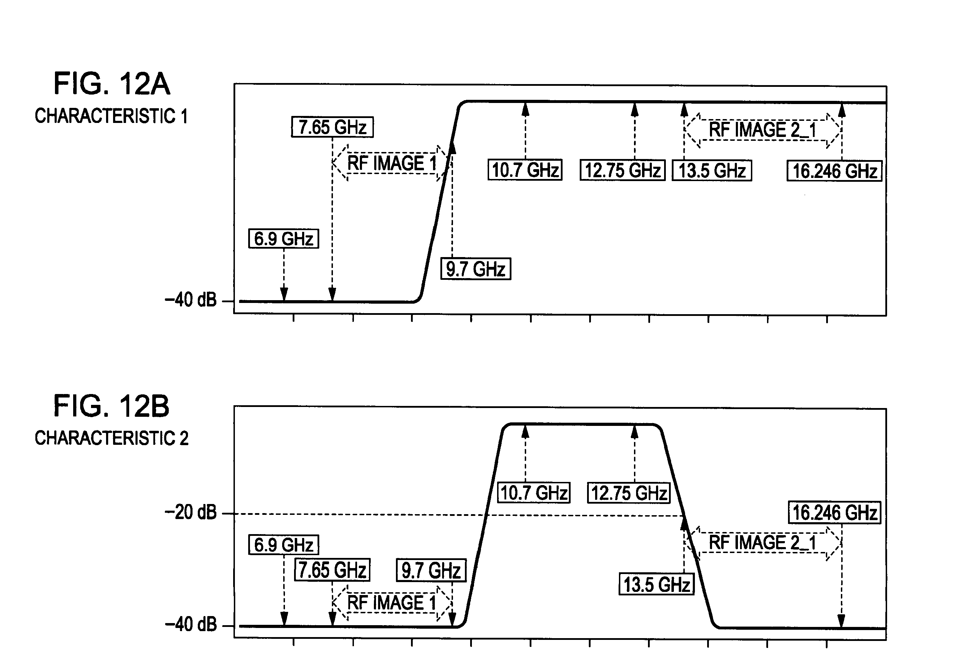

In this embodiment, RF signals including satellite broadcast reception signals of 10.7 GHz to 12.75 GHz are input to the high-pass filters 2011 and 2013 provided in the input stage of the wideband LNB, and the filters allow a high band of 9.7 GHz or more to pass therethrough. Fig. 12A shows a frequency characteristic of the RF signals in a range from the output stages of the high-pass filters 2011 and 2013 to the input stages of the band-pass filters 2102 and 2132. As shown in the figure, a signal component of the image band "RF Image 1" of 7.65 GHz to 9.7 GHz included in an attenuation region of the high-pass filters 2011 and 2013 and the frequency band "RF Image 2_2" of 4.154 GHz to 6.9 GHz is attenuated. On the other hand, an RF signal component "RF Image 2_1" of the image band "IF Image 1" for the second IF signal is not eliminated because the "RF Image 2_1" is 9.7 GHz or more.

The RF signals that have passed through the high-pass filters 2011 and 2013 and have been amplified with predetermined gain in the low-noise amplifiers 2101 and 2131 are input to the band-pass filters 2102 and 2132. The band-pass filters 2102 and 2132 have a pass band of 10.7 GHz to 12.75 GHz, which is a frequency band of the satellite broadcast reception signals, with a predetermined allowance. In this embodiment, the frequency characteristic of the band-pass filters 2102 and 2132 enables the maximum frequency 9.7 GHz of the image band "RF Image 1" to be attenuated to -40 dB or more without attenuating the minimum frequency 10.7 GHz of the satellite broadcast reception signals. Fig. 12B shows a frequency characteristic of the RF signals in a range from the output stages of the band-pass filters 2102 and 2132 to the input stages of the RF mixers 2103 and 2133. As shown in the figure, a difference between the minimum frequency 10.7 GHz of the satellite broadcast reception signals and the maximum frequency 9.7 GHz of the image band "RF Image 1" is about 1 GHz, so that the above-described attenuation characteristic can be realized without increasing the size of filters. A specific configuration of the high-pass filters 2011 and 2013 is described below.

On the other hand, a difference between the minimum frequency 13.5 GHz of "RF Image 2_1", which is an RF signal component of the image band "IF Image 1" for the second IF signal, and the maximum frequency 12.75 GHz of the satellite broadcast reception signals is only about 750 MHz. In order to attenuate the high-band side higher than the vicinity of 13.5 GHz to about -40 dB without attenuating the maximum frequency 12.75 GHz of the satellite broadcast reception signals, the size of the band-pass filters 2102 and 2132 needs to be significantly increased. In this embodiment, the vicinity of 13.5 GHz is attenuated to -20 dB so as to maintain the size of the band-pass filters 2102 and 2132 to the size in the known art. As a result, the first IF signals are output with a signal component of "RF Image 2_1", which later becomes the image band "IF Image 1", being included.

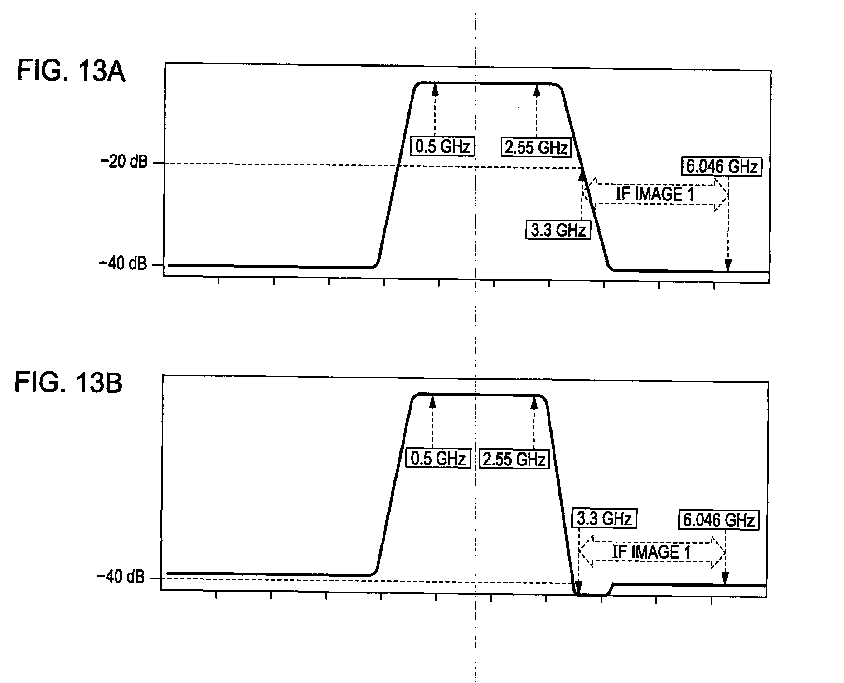

The RF mixers 2103 and 2133 serving as the first frequency converting block output the first IF signals that are generated by frequency conversion of multiplying the RF signals output from the band-pass filters 2102 and 2132 by a local oscillation signal Lo. The first IF signals are amplified with predetermined gain in the amplifiers 2106 and 2136 and are input to the band-elimination filters 2012 and 2014. Fig. 13A shows a frequency characteristic of the first IF signals in a range from the output stages of the RF mixers 2103 and 2133 to the previous stages of the band-elimination filters 2012 and 2014. The frequency band of the satellite broadcast reception signals 10.7 GHz to 12.75 GHz is converted to a frequency band of 0.5 GHz to 2.55 GHz. Also, the frequency band "RF Image 2_1" (13.5 GHz to 16.246 GHz) that is not sufficiently attenuated in the band-pass filters 2102 and 2132 is converted to a frequency band 3.3 GHz to 6.046 GHz. As described above, 3.3 GHz to 6.046 GHz correspond to the image band "IF Image 1" for the second IF signals.

The band-elimination filters 2012 and 2014 have a band-elimination characteristic of a bandwidth of about 3.3 GHz to 4.2 GHz. As described above, in the RF signals, the vicinity of 13.5 GHz to 14.0 GHz in the frequency band "RF Image 2_1" cannot sufficiently be attenuated in the band-pass filters 2102 and 2132. Thus, the band-elimination filters 2012 and 2014 eliminate a part corresponding to the region that is not sufficiently attenuated from the first IF signals generated by frequency conversion in the first frequency converting block, before the first IF signals are converted by the second frequency converting block. Fig. 13B shows a frequency characteristic of the first IF signals in a range from the output stages of the band-elimination filters 2012 and 2014 to the input stages of the IF mixers 2110, 2113, 2140, and 2143 serving as the second frequency converting block. As shown in the figure, a high-band side higher than 3.3 GHz or more in the first IF signals can be attenuated to the vicinity of -40 dB by passing the first IF signals through the band-elimination filters 2012 and 2014. As a result, the image band "IF Image 1" for the second IF signals can be sufficiently eliminated.

The first IF signal on the horizontal polarization signal H side that has passed through the band-elimination filters 2012 and 2014 is distributed by the distributor 2107 to the first switch circuit 2108 and the second switch circuit 2138. The first IF signal on the vertical polarization signal V side is distributed by the distributor 2137 to the first switch circuit 2108 and the second switch circuit 2138.

The first IF signals selectively output from the first and second switch circuits 2108 and 2138 are converted to predetermined frequencies in the IF mixers 2110, 2113, 2140, and 2143 serving as the second frequency converting block, respectively.

As described above, among the frequency bands "RF Image 2_1" and "RF Image 2_2" corresponding to the image band "IF Image 1" for the second IF signals, the frequency band "RF Image 2_2" is eliminated in the band-pass filters 2102 and 2132, whereas the frequency band "RF Image 2_1", which cannot sufficiently be attenuated (eliminated) and remains after conversion to the first IF signals, is eliminated in the band-elimination filters 2012 and 2014 before conversion to the second IF signals. Accordingly, the first IF signals from which the image band "IF Image 1" is eliminated are input to the IF mixers 2110, 2113, 2140, and 2143, and are converted to the second IF signals.

The second IF signals that have been converted to fixed frequencies in the respective IF mixers 2110, 2113, 2140, and 2143 are input to band-pass filters 2123, 2124, 2153, and 2154, where an unnecessary frequency component to the respective fixed frequencies is cut, and the second IF signals are mixed in two stages of mixers 2125, 2155, and 2126. Then, the signal is amplified with set gain in an IF amplifier 2127, and is output to a cable from an output port.

Now, a specific example of configurations of the band-pass filters 2102 and 2132 and the band-elimination filters 2012 and 2014 is described.

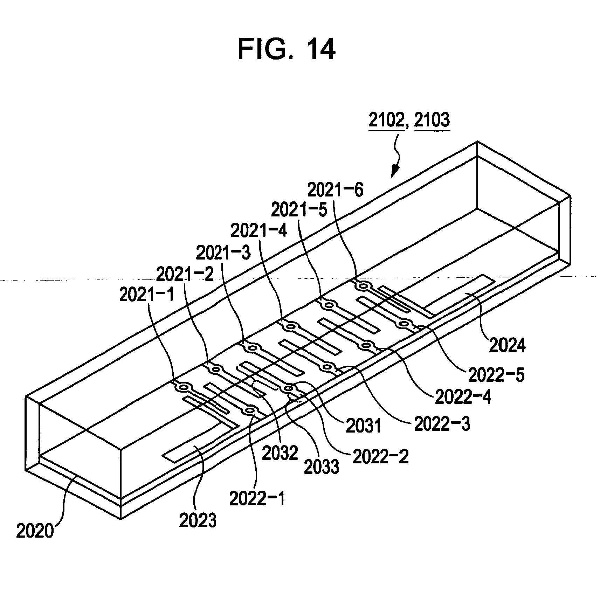

Fig. 14 shows an example of a configuration of the band-pass filter 2102 (2132). Coupling filter elements 2021-1 to 2021-6 and coupling filter elements 2022-1 to 2022-5 are alternately placed on a substrate 2020. One input/output filter element 2023 is adjacent to the coupling filter element 2021-1 at one end, and the other input/output filter element 2024 is adjacent to the coupling filter element 2021-6 at the other end.

Each of the coupling filter elements has a midpoint 2031 connected to a ground, an open stub 2032 extending from the midpoint 2031 to the center of the substrate, and a short stub 2033 extending to a side surface of the substrate. In the coupling filter elements 2021-1 to 2021-6 placed on one side and the coupling filter elements 2022-1 to 2022-5 placed on the other side, the respective open stubs 2032 are alternately placed in an alignment direction.

By adjusting the gap between adjacent coupling filter elements, the width of each coupling filter element, and the lengths of the open stubs 2032 and short stubs 2033, the band-pass filter 2102 (2132) having a frequency characteristic in which a center pass band is 10.7 GHz to 12.75 GHz can be configured.

As a result of simulation about the frequency characteristic of the band-pass filter having the above-described configuration, it was verified that a low band side from 9.7 GHz can be attenuated to -40 dB or more. Thus, a performance of eliminating the image band "RF Image 1" (7.65 GHz to 9.7 GHz) and "RF Image 2_2" (4.154 GHz to 6.9 GHz) as an RF signal component of the image band "IF Image 1" for the second IF signals can be realized.

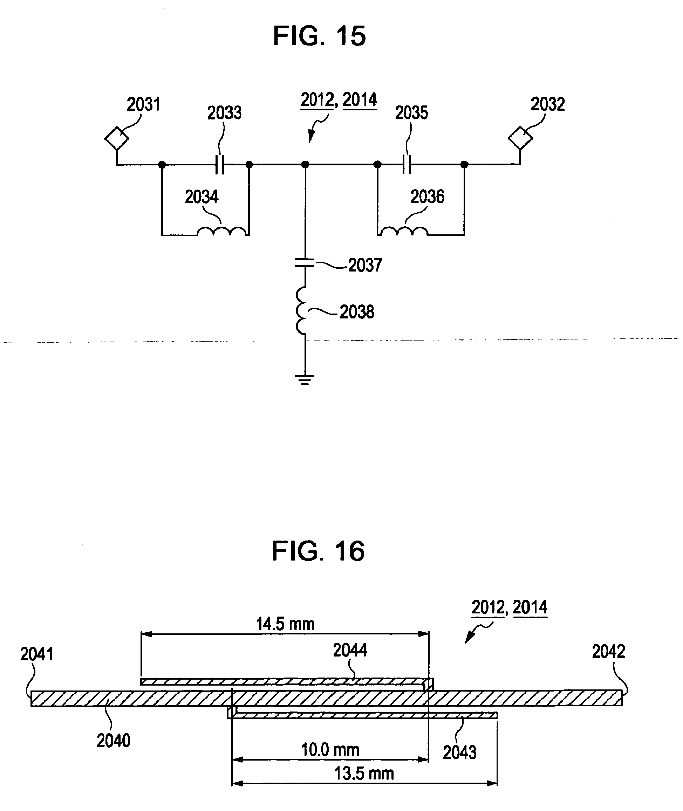

Fig. 15 shows an example where the band-elimination filter 2012 (2014) includes a lumped-constant LC filter. In this lumped-constant LC filter, an LC parallel circuit including a capacitor 2033 and an inductor 2034 and an LC parallel circuit including a capacitor 2035 and an inductor 2036 are provided in series between one input/output port 2031 and the other input/output port 2032. Also, an LC series circuit including a capacitor 2037 and an inductor 2038 is provided between a middle node and a ground.

As a result of simulation about the frequency characteristic of the lumped-constant LC filter having the above-described configuration, it was verified that a band elimination characteristic of eliminating about 3.3 GHz to 4.2 GHz can be realized. The band elimination characteristic slightly varies in accordance with variation in the capacitance of the capacitors. In the lumped-constant LC filter, change in the frequency characteristic due to variation in the capacitance of the capacitors was simulated. When a C value was changed in ±0.1 pF with a fixed L value, variation in 3.3 GHz was 30 dB or more. If the capacitance of the capacitors is larger than a set value by +0.1 pF, the attenuation amount near 3.3 GHz can be insufficient.

Fig. 16 shows an example where the band-elimination filter 2012 (2014) includes a distributed-constant LC filter. In this distributed-constant LC filter, one end of a strip line 2040 functions as one input/output port 2041 and the other end functions as the other input/output port 2042. An open stub 2043 of almost λ/4 (13.5 mm) is provided at a first midpoint of the strip line 2040 via a T-shaped branch. Also, an open stub 2044 of almost λ/4 (14.5 mm) is provided at a second midpoint, which is distant from the first midpoint by a predetermined distance (10.0 mm), via a T-shaped branch. A center frequency is set to 3.6 GHz.

As a result of simulation about the frequency characteristic of the distributed-constant LC filter having the above-described configuration, it was verified that a band elimination characteristic of eliminating about 3.3 GHz to 4.2 GHz can be realized. When change in the attenuation amount in 3.3 GHz was examined by changing the lengths of the open stubs 2043 and 2044 by ±0.1 mm, the change was within 10 dB. Accordingly, by configuring the band-elimination filter 2012 (2014) by using the distributed-constant LC filter, a stable performance in which variation in the attenuation amount in 3.3 GHz with respect to variation in the lengths of the open stubs 2043 and 2044 is suppressed can be realized.

As described above, according to this embodiment, the band-elimination filters 2012 and 2014 to eliminate the image band "IF Image 1", which cannot be eliminated by the band-pass filters 2102 and 2132, are provided after the RF mixers 2103 and 2133 serving as the first frequency converting block and before the IF mixers 2110, 2113, 2140, and 2143 serving as the second frequency converting block. Accordingly, a favorable image characteristic can be realized without attenuating a signal band of satellite broadcast reception signals.

The present invention is not limited to the above-described embodiments, but various modifications can be carried out. For example, low-pass filters or band-pass filters can be used instead of the band-elimination filters 2012 and 2014. A circuit other than the band-elimination filters 2012 and 2014 can be used as long as the circuit functions as an attenuation circuit capable of attenuating an image band approximate to a signal band of satellite broadcast reception signals to a predetermined attenuation level.

The present invention can be applied to a frequency converter for receiving satellite broadcast, capable of superimposing a plurality of signals selected from among received broadcast signals and outputting the signals thorough a cable.

## Claims

1. A frequency converter for receiving satellite broadcast, the frequency converter comprising:
a first frequency converting block to obtain a first channel signal group through group conversion of first broadcast channel signals received from a satellite;
a second frequency converting block to obtain a second channel signal group through group conversion of second broadcast channel signals received from the satellite;
a first switch circuit including first and second input terminals to receive the first channel signal group and the second channel signal group and first and second output terminals each of which outputs one of the channel signal groups selected;
a second switch circuit including third and fourth input terminals to receive the first channel signal group and the second channel signal group and third and fourth output terminals each of which outputs one of the channel signal groups selected; and
third to sixth frequency converting blocks that correspond to the first to fourth output terminals of the first and second switch circuits and that convert the channel signal groups received from the corresponding output terminals to predetermined fixed frequencies, respectively,
wherein the first and second switch circuits and the third to sixth frequency converting blocks are provided on the same substrate surface, the first and second switch circuits are placed to face each other while sandwiching a line segment connecting first and second leading positions to lead the first and second channel signal groups to the substrate surface, the first switch circuit is placed so that the first and second input terminals are nearer to the line segment compared to the first and second output terminals, and the second switch circuit is placed so that the third and fourth input terminals are nearer to the line segment compared to the third and fourth output terminals.

2. The frequency converter for receiving satellite broadcast according to Claim 1,
wherein the third and fourth frequency converting blocks are placed on the same side as the first switch circuit with respect to the line segment connecting the first and second leading positions, the third and fourth frequency converting blocks being positioned on both sides of the first switch circuit, and
wherein the fifth and sixth frequency converting blocks are placed on the same side as the second switch circuit with respect to the line segment connecting the first and second leading positions, the fifth and sixth frequency converting blocks being positioned on both sides of the second switch circuit.

3. The frequency converter for receiving satellite broadcast according to Claim 1 or 2, wherein the first and second frequency converting blocks are provided on a substrate surface different from the substrate surface provided with the first and second switch circuits and the third to sixth frequency converting blocks.

4. A frequency converter for receiving satellite broadcast, the frequency converter comprising:
a first frequency converting block to obtain a first channel signal group through group conversion of first broadcast channel signals received from a satellite;
a second frequency converting block to obtain a second channel signal group through group conversion of second broadcast channel signals received from the satellite;
a switch circuit that selects an arbitrary channel signal group from among the first and second channel signal groups and that includes first and second output terminals each of which outputs the selected channel signal group;
a third frequency converting block that corresponds to the first output terminal of the switch circuit and that converts the channel signal group received from the first output terminal to a fixed frequency;
a fourth frequency converting block that corresponds to the second output terminal of the switch circuit and that converts the channel signal group received from the second output terminal to a fixed frequency;
a first attenuator provided between the first output terminal of the switch circuit and the third frequency converting block; and
a second attenuator provided between the second output terminal of the switch circuit and the fourth frequency converting block.

5. The frequency converter for receiving satellite broadcast according to Claim 4, wherein amplifiers to compensate for all or part of an attenuation amount in the first and second attenuators are provided between the first frequency converting block and the switch circuit and between the second frequency converting block and the switch circuit, respectively.

6. The frequency converter for receiving satellite broadcast according to Claim 4 or 5, wherein an amplifier is provided after a mixer to mix signals output from the third and fourth frequency converting blocks, and an attenuation amount corresponding to part of an amplification amount in the amplifier is added to the attenuation amount in the first and second attenuators so as to maintain a total gain.

7. The frequency converter for receiving satellite broadcast according to any of Claims 4 to 6, further comprising:
a first wideband amplifier connected in series to the first attenuator, the first wideband amplifier being provided between the switch circuit and the third frequency converting block; and
a second wideband amplifier connected in series to the second attenuator, the second wideband amplifier being provided between the switch circuit and the fourth frequency converting block.

8. A frequency converter for receiving satellite broadcast, the frequency converter comprising:
a first frequency converting block to convert satellite broadcast reception signals to a channel signal group of an intermediate frequency band;
a second frequency converting block to convert the channel signal group to a predetermined fixed frequency; and
an attenuation circuit to attenuate a frequency band corresponding to image frequencies for the second frequency converting block, the attenuation circuit being provided between the first and second frequency converting blocks.

9. The frequency converter for receiving satellite broadcast according to Claim 8, wherein the attenuation circuit includes a band-elimination filter.

10. The frequency converter for receiving satellite broadcast according to Claim 8, wherein the attenuation circuit includes a low-pass filter.

11. The frequency converter for receiving satellite broadcast according to any of Claims 8 to 10, further comprising:
a switch circuit including a plurality of input terminals to receive a plurality of channel signal groups and a plurality of output terminals to output the channel signal groups input to the input terminals, the switch circuit being provided between the attenuation circuit and the second frequency converting block.

12. The frequency converter for receiving satellite broadcast according to Claim 11,
wherein the first frequency converting block comprises a plurality of first frequency converting blocks, and
wherein the switch circuit selects one of channel signal groups input from the plurality of first frequency converting blocks to the input terminals and outputs the selected channel signal group.
